# EUROPÄISCHE PATENTSCHRIFT

(11) **EP 3 691 026 B1**
(45) Veröffentlichungstag und Bekanntmachung des Hinweises auf die Patenterteilung: **19.05.2021**
(21) Anmeldenummer: 19155281.9
(22) Anmeldetag: 04.02.2019
(51) Int. Cl.: H01Q 1/22, H01Q 15/08, H01Q 19/06

(54) **ANTENNENANORDNUNG**
ANTENNA ASSEMBLY
ENSEMBLE D'ANTENNE

(43) Veröffentlichungstag der Anmeldung: 05.08.2020
(73) Patentinhaber: VEGA Grieshaber KG, 77709 Wolfach (DE)
(72) Erfinder: SCHULTHEISS, Daniel, 78132 Hornberg (DE)
(74) Vertreter: Maiwald Patent- und Rechtsanwaltsgesellschaft mbH

(56) Entgegenhaltungen:
- EP-A1- 2 930 476
- CN-U- 207 528 301
- CN-U- 208 401 040
- DE-A1- 19 755 607
- DE-A1-102012 016 120

## Beschreibung

### Gebiet der Erfindung

Die Erfindung betrifft eine Antennenanordnung zur Anlagenautomatisierung, insbesondere zur Füllstands- oder Grenzstandüberwachung sowie eine Radarmessanordnung zur Anlagenautomatisierung.

### Technischer Hintergrund

In der Prozessautomation, insbesondere in der Füllstands- und Grenzstand- sowie der Druckmesstechnik, werden häufig Antennenanordnungen eingesetzt, welche dazu dienen, einen Füllstand bzw. Grenzstand in einem Behälter zu ermitteln. Jedoch können bei erhöhten Prozesstemperaturen elektronische Komponenten der thermischen Belastung oft nicht standhalten. Auch bei Hochdruckanwendungen, bei denen sehr hohe Drücke auf eine Linse der Antennenanordnung einwirken, können bspw. Kunststofflinsen von Radarsensoren den auf sie wirkenden Druck oft nicht standhalten.

DE 10 2012 016 120 A1 beschreibt ein Mikrowellenfenster und ein nach dem Radarprinzip arbeitendes Füllstandmesssystem. Das Mikrowellenfenster ist an einem Flansch angebracht.

EP 2 930 476 A1 beschreibt eine Schutzvorrichtung für einen Hohlleiter und ein Verfahren zum Herstellen einer Schutzvorrichtung. Es wird eine Gehäusevorrichtung beschrieben, die einen Hohlleiter aufweist, der für die Führung einer elektromagnetischen Welle mit einer vorgebbaren Wellenlänge ausgebildet ist und eine zu der Ausbreitungsrichtung einer von dem Hohlleiter geführten elektromagnetischen Welle im Wesentlichen senkrecht verlaufende Randfläche aufweist.

CN 207 528 301 U beschreibt ein Füllstandradargerät mit einer Hornantenne, die eine Linse aufweist.

CN 208 401 040 U beschreibt eine Hornantenne mit einem Anpasskegel und einer Linse.

### Zusammenfassung

Mit den im Folgenden beschriebenen Ausführungsformen kann in vorteilhafter Weise eine verbesserte Antennenanordnung bereitgestellt werden.

Ein Aspekt betrifft eine Antennenanordnung für einen Sensor zur Anlagenautomatisierung, insbesondere zur Füllstands- und/oder Grenzstandüberwachung, welches einen Primärstrahler aufweist. Der Primärstrahler kann dazu eingerichtet sein, ein Radarsignal zu erzeugen, auszusenden und/oder zu empfangen. Zudem weist die Antennenanordnung eine erste Linse zum Fokussieren des Radarsignals auf. Des Weiteren weist die Antennenanordnung eine zweite Linse zum Optimieren des fokussierten Radarsignals auf. Die zweite Linse ist beabstandet von der ersten Linse und/oder dem Primärstrahler angeordnet. Dies dient zur thermischen, elektrischen und/oder medialen Entkopplung der zweiten Linse von der ersten Linse und/oder dem Primärstrahler.

Diese Anordnung kann den Vorteil aufweisen, dass der Primärstrahler als auch die erste Linse keine hochtemperaturresistenten Eigenschaften aufweisen muss, da die zweite Linse an dem Behälter angeordnet ist und diese aus einem hochfesten Material gefertigt ist. Somit lässt sich der Wärmefluss von dem Behälter oder dem Überwachungsobjekt zwischen der zweiten und der ersten Linse unterbrechen, so dass die erste Linse sowie der Primärstrahler nicht aus einem hochbeständigen Material gefertigt werden müssen. Zudem kann diese Anordnung den Vorteil aufweisen, dass mittels der Anordnung der zwei dielektrischen Linsen die Mikrowellen des Primärstrahlers besser ausgerichtet werden können sowie eine höhere Brennweite erzielt werden kann. Zudem kann die Anordnung den Vorteil mitbringen, dass eine optimale Ausleuchtung der prozessseitigen Linse, der zweiten Linse, erreicht werden kann.

In anderen Worten kann sich die Antennenanordnung in eine Prozessseite und in eine Auswerteseite aufteilen, wobei die Prozessseite, welche die zweite Linse umfasst, hohen Temperaturen und/oder Drücken widerstehen kann. Auf der Auswerteseite der Antennenanordnung kann der Primärstrahler und/oder die erste Linse angeordnet sein, wobei beide Komponenten keinen hohen Temperaturen und/oder Drücken widerstehen müssen. Der Abstand zwischen der ersten und zweiten Linse kann derart gewählt sein, dass die erste von der zweiten Linse thermisch, elektrisch und/oder medial voneinander entkoppelt sind. In Abhängigkeit des Abstandes zwischen der ersten und zweiten Linse kann die Brennweite der ersten und zweiten Linse derart gewählt werden, dass eine optimale Ausleuchtung der beiden Linsen stattfinden kann. Dies kann insbesondere dazu dienen, dass ein möglichst kleiner Öffnungswinkel erreicht wird sowie deutlich weniger Nebenkeulen des Radarsignals auftreten können. Bei der Fokussierung des Radarsignals kann dabei das von dem Primärstrahler ausgesendete Radarsignal von der ersten Linse aufgenommen, bzw. eingesammelt werden und auf die zweite Linse ausgerichtet werden, sodass eine optimale Ausleuchtung der zweiten Linse erreicht werden kann. Bei der Optimierung des Radarsignals durch die zweite Linse kann das von der ersten auf die zweite Linse projizierte Radarsignal derart ausgerichtet werden, dass eine gewünschte Brennweite der zweiten Linse erreicht werden kann. Dies kann den Vorteil ausbilden, dass eine sehr hohe Brennweite erreicht werden kann, was insbesondere bei sehr großen Behältern, wie bspw. Silos, die mit der Antennenanordnung vermessen werden, vorteilhaft sein kann. Dabei kann es sich bei der Optimierung ebenfalls um ein zusätzliches Optimieren des Radarsignals handeln. Das zusätzliche Fokussieren des Radarsignals kann zu einem verbesserten Radarsignal führen. Bei dem Sensor kann es sich insbesondere um einen Radarsensor handeln, welcher dazu geeignet ist einen Füllstand- und/oder Grenzstand zu erfassen.

Gemäß der vorliegenden Erfindung weist die Antennenanordnung zwischen der ersten und zweiten Linse einen Hochfrequenzdämpfer auf. Der Hochfrequenzdämpfer ist dazu eingerichtet, Nebenkeulen des Radarsignals zu unterdrücken. In anderen Worten kann zwischen der ersten und zweiten Linse ein Hochfrequenzdämpfer, beispielsweise ein hochfrequenzdämpfendes Material wie PEEK mit Kohlefaserfüllung oder PPS mit Absorberfüllung, angeordnet werden, um Nebenkeulen des Radarsignals zu unterdrücken und somit das sogenannte Klingeln eines Radarsystems zu verbessern und/oder zu reduzieren. Alternativ können auch selbstklebende Matten als Hochfrequenzdämpfer dienen, wie beispielsweise ferritgefüllte Silikone oder andere Hochfrequenzabsorber. Ein Vorteil dieser Ausführungsform kann es sein, dass durch die Anordnung des Hochfrequenzdämpfers die Nebenkeulen zusätzlich unterdrückt werden und somit die Qualität des Radarsignals deutlich gesteigert werden kann.

Gemäß einer beispielhaften Ausführungsform kann der Hochfrequenzdämpfer in einem Randbereich zwischen der ersten und der zweiten Linse derart angeordnet sein, dass der Hochfrequenzdämpfer die erste Linse und/oder der Primärstrahler von der zweiten Linse thermisch, elektrisch und/oder medial entkoppelt. Dabei kann der Hochfrequenzdämpfer insbesondere derart angeordnet sein, dass er keine Wärmebrücke oder Ähnliches zwischen der ersten und der zweiten Linse ausbildet. Damit kann eine Entkopplung der ersten von der zweiten Linse erreicht werden. Alternativ oder ergänzend kann der Hochfrequenzdämpfer nur am Rand der Antennenanordnung angebracht sein. Beispielsweise kann der Hochfrequenzdämpfer nur an dem Rand der ersten und/oder zweiten Linse vorgesehen sein, bspw. in einer Gehäusewandung der Antennenanordnung. Alternativ ist der Hochfrequenzdämpfer derart angeordnet, dass er ebenfalls elektrisch die erste und/oder Linse voneinander entkoppelt, indem der Hochfrequenzdämpfer derart ausgebildet und/oder angeordnet ist, dass er keine elektrischen Ströme leitet. Der Vorteil dieser Anordnung ist, dass mittels des Hochfrequenzdämpfers kein Wärmefluss zwischen der ersten und zweiten Linse und/oder zwischen der zweiten Linse und dem Primärstrahler stattfinden kann. Ein weiterer Vorteil kann sein, dass eine potentialfreie Verbindung zwischen der zweiten und der ersten und/oder dem Primärstrahler erreicht werden kann. Somit kann nicht nur die erste von der zweiten Linse thermisch entkoppelt und somit hochresistentes Material eingespart, sondern auch die Qualität des Radarsignals verbessert werden.

Gemäß einer beispielhaften Ausführungsform kann die Antennenanordnung ein Gehäuse umfassen, wobei der Primärstrahler in dem Gehäuse angeordnet ist. Zudem kann das Gehäuse derart ausgebildet sein, dass es die erste Linse aufnimmt und/oder ausbildet. In anderen Worten weist die Antennenanordnung ein Gehäuse auf, in welchem der Primärstrahler angeordnet ist, wobei die erste Linse in der Seitenwand des Gehäuses positioniert ist und/oder die Seitenwand des Gehäuses die erste Linse ausbildet. In einer beispielhaften Ausführungsform kann das Gehäuse aus einem Kunststoffverbund gefertigt sein, wobei ein Teil des Gehäuses die erste Linse ausbildet. Dies hat den Vorteil, dass eine Funktionsintegration stattfinden kann, welche in einer Kostenreduktion resultieren kann. Alternativ kann die erste Linse auch als Einlegeteil in das Gehäuse eingespritzt werden. Der Vorteil des Gehäuses ist, dass der Primärstrahler von Verunreinigungen und Feuchtigkeit geschützt ist, so dass eine hohe Qualität des Radarsignals gewährleistet werden kann.

Gemäß einer beispielhaften Ausführungsform kann das Gehäuse eine Öffnung aufweisen, in welcher die erste Linse angeordnet und/oder anordenbar ist. Zudem kann das Gehäuse dazu eingerichtet sein, weitere Komponenten aufzunehmen. In anderen Worten kann das Gehäuse ein Elektronikbecher sein, welcher an einer Seitenwand eine Öffnung aufweist, in welcher die erste Linse angeordnet ist. In dem Elektronikbecher kann der Primärstrahler angeordnet sein sowie weitere elektronische Komponenten. Der Vorteil dieser Ausführungsform ist, dass eine Standardkomponente wie beispielsweise ein Elektronikbecher verwendet werden kann, so dass ein Kosteneinsparungseffekt entstehen kann sowie eine vereinfachte Handhabbarkeit in der Montage erreicht werden kann.

Gemäß einer beispielhaften Ausführungsform kann der Primärstrahler und die erste Linse einteilig ausgeführt sein. In anderen Worten ist der Primärstrahler mit der ersten Linse derart verbunden, dass sie als ein Bauteil angesehen werden kann. Der Vorteil dieser Ausführungsform kann sein, dass durch die Integration der beiden separaten Bauteile ineinander weniger Bauraum benötigt wird und eine Kontaktierung des Primärstrahlers einfacher erfolgen kann.

Gemäß einer beispielhaften Ausführungsform können der Primärstrahler und die erste Linse mittels eines Kunststoffverbundes verbunden werden. Beispielsweise könnten der Primärstrahler und die erste Linse als Einlegeteile ausgeführt sein, zur Positionierung in einer Form zum Umspritzen der beiden Komponenten. Des Weiteren kann der Primärstrahler mit der ersten Linse mittels eines Kunststoffverbundes verbunden werden. In anderen Worten wird der Primärstrahler und die erste Linse mittels eines Mehrkomponentenspritzgießverfahrens als ein Bauteil ausgeführt. Dabei kann der Chip mit einem Kunststoffverbund umspritzt werden. Beispielhafterweise wird der Primärstrahler und die erste Linse als Einlegeteil in eine Kunststoffspritzgießform eingelegt und diese mithilfe eines Kunststoffverbundes miteinander verbunden. Dies kann den Vorteil mit sich bringen, dass die Montagezeit deutlich verkürzt wird, da durch die integrale Fertigung ein Montageschritt eingespart werden kann. Zudem kann der Vorteil generiert werden, dass der Primärstrahler als auch zumindest ein Teil der ersten Linse durch den Kunststoffverbund vor Verunreinigung und/oder Feuchtigkeit geschützt ist.

Gemäß einer beispielhaften Ausführungsform kann der Kunststoffverbund eine geringere Dielektrizitätskonstante aufweisen als die erste Linse. Diese Anordnung kann insbesondere bei Primärstrahlern vorteilhaft sein, welche ein hochfrequentes Radarsignal aussenden.

Gemäß einer beispielhaften Ausführungsform kann die zweite Linse eine größere Brennweite als die erste Linse aufweisen. Mit anderen Worten dient die erste Linse dazu, das Radarsignal auf die zweite Linse zu richten und die zweite Linse dient dazu, das Radarsignal in einen beispielhaften Messbehälter zu richten, so dass der Füllstand bzw. der Grenzstand in dem beispielhaften Behälter ermittelt werden kann. Der Vorteil dieser Anordnung kann sein, dass mittels der größeren Brennweite der zweiten Linse insbesondere beispielhafte Behälter, welche eine hohe Erstreckungslänge aufweisen, besser mithilfe der Antennenanordnung vermessen werden können.

Gemäß einer beispielhaften Ausführungsform kann die Antennenanordnung eine dritte Linse aufweisen. Die dritte Linse kann dabei zwischen der ersten und der zweiten Linse angeordnet sein. Zudem ist die dritte Linse dazu eingerichtet, den Abstand zwischen der ersten und der zweiten Linse zu erhöhen, insbesondere mittels Defokussierung. In anderen Worten kann die Antennenanordnung drei Linsen aufweisen, wobei die erste Linse direkt an dem Primärstrahler angeordnet sein kann, wobei die zweite Linse direkt an einem Messbehälter oder Ähnlichem angeordnet sein kann. Zwischen der ersten und der zweiten Linse kann die dritte Linse angeordnet sein. Dies bietet unter anderem die Möglichkeit, dass durch kleine Öffnungen gestrahlt werden kann, da eine mögliche zu starke Fokussierung der ersten Linse mithilfe der dritten Linse korrigiert werden kann. Somit kann trotz eines breiten Öffnungswinkels der Primärstrahler mithilfe der Kombination aus drei Linsen eine hohe Brennweite erreicht werden, da mithilfe der dritten Linse die Mikrowellen, welche durch die erste Linse fokussiert werden, optimal auf die zweite Linse gerichtet werden können. Somit kann durch die dritte Linse die Brennweite der gesamten Antennenanordnung verändert werden. Zudem kann auch eine Vielzahl von Linsen zwischen der ersten und der zweiten Linse angeordnet werden. Dabei kann die Vielzahl von Linsen, teilweise defokussierend und teilweise fokussierend auf das Radarsignal wirken. Der Vorteil der Vielzahl von Linsen kann sein, dass ein großer Abstand zwischen der ersten und zweiten Linse überbrückt werden kann.

Gemäß einer beispielhaften Ausführungsform kann die Antennenanordnung einen Isolator aufweisen, welcher zwischen der ersten und der zweiten Linse angeordnet ist und/oder anordenbar ist. Zudem kann der Isolator dazu eingerichtet sein, der Primärstrahler und/oder die erste Linse von der zweiten Linse thermisch, elektrisch und/oder medial zu entkoppeln. Dabei kann der Isolator aus einem Material gefertigt sein, welches insbesondere die Orientierung der Radarsignale nicht verändert. Dabei kann die Anordnung des Isolators derart vorteilhaft sein, dass mithilfe des Isolators die erste Linse näher an die zweite Linse montiert werden kann, welches unter Umständen einen positiven Effekt auf die Qualität des Radarsignals haben kann. Zudem kann mithilfe des Isolators Wärmestrahlung, welche aus der zweiten Linse austritt, gezielt abgeleitet werden, so dass die erste Linse als auch den Primärstrahler weniger belastet werden.

Gemäß einer beispielhaften Ausführungsform kann der Isolator aus einem Gas, einem Feststoff, einer Flüssigkeit und/oder einem Fluid gebildet sein. In einer beispielhaften Ausführungsform kann der Isolator aus einem wärmeleitfähigen Kunststoff gebildet sein, wie beispielsweise ein PA66, PBT und/oder PEEK. Der Vorteil dieser Anordnung kann unter anderem sein, dass die Wärme schnell über den Isolator abgeführt werden kann, so dass die erste Linse und/oder der Primärstrahler geringer thermisch belastet werden. Alternativ wäre ebenso ein Isolator aus einem Gas denkbar, der mithilfe eines Luftstroms oder eines gezielt ausgewählten Gases den Wärmefluss zwischen der ersten und zweiten Linse reduziert.

Gemäß einer beispielhaften Ausführungsform kann die zweite Linse eingerichtet sein, Temperaturen von über 100°C zu widerstehen. Beispielsweise kann die zweite Linse aus einem Kunststoff wie PA66, PTFE oder PEEK gefertigt sein, welche eine erhöhte Temperaturbeständigkeit aufweisen können. Alternativ kann die zweite Linse aus einem Glas oder Glasverbund hergestellt werden, welcher dazu ausgelegt ist, Temperaturen von über 100°, insbesondere Temperaturen von über 150-200°C, zu widerstehen.

Gemäß einer beispielhaften Ausführungsform kann der Querschnitt und/oder der Durchmesser der ersten Linse zu dem Querschnitt und/oder dem Durchmesser der zweiten Linse in einem Verhältnis zwischen 1:1 und 1:5 liegen.. In anderen Worten kann die zweite Linse größer als die erste Linse sein. Es konnte überraschenderweise festgestellt werden, dass bei einem Verhältnis zwischen 1:2 und 1:4 die Nebenkeulenunterdrückung an einem Optimalwert sein kann, so dass ein stark fokussiertes Radarsignal zur Verfügung gestellt werden kann. In einer beispielhaften Ausführungsform kann der Durchmesser der ersten Linse zwischen 2mm und 10mm liegen. Dabei kann der Durchmesser der zweiten Linse zwischen 10mm und 50mm liegen.

Gemäß einer beispielhaften Ausführungsform kann der Abstand zwischen der ersten und der zweiten Linse in einem Verhältnis zwischen 1 und 10 zum Querschnitt bzw. Durchmesser der ersten Linse liegen. In einer beispielhaften Ausführungsform beträgt der Querschnitt der ersten Linse 3 mm und der Abstand zwischen der ersten und der zweiten Linse kann 9 mm betragen. Dabei konnte überraschenderweise festgestellt werden, dass der Abstand zwischen der ersten und der zweiten Linse bei einem Verhältnis zwischen 2 und 6 zum Querschnitt der ersten Linse die Ausleuchtung der zweiten Linse optimal sein kann, sodass ein stark fokussiertes Radarsignals ausgebildet werden kann.

Gemäß einer beispielhaften Ausführungsform kann die dritte Linse von der zweiten Linse thermisch, elektrisch und/oder medial entkoppelt sein. Dabei kann die dritte Linse aus demselben Material gefertigt sein wie die erste Linse, sodass zusätzlich temperaturhochresistentes Material eingespart werden kann.

Gemäß einer beispielhaften Ausführungsform können die erste und/oder die zweite Linse rotationssymmetrisch ausgebildet sein. Dabei können die erste und die zweite Linse insbesondere rotationssymmetrisch zu einer Achse ausgebildet sein, wobei die Achse der Koaxialität der ersten zur zweiten Linse entspricht. Alternativ kann auch die erste Linse rotationssymmetrisch zu einer Längserstreckungsachse der ersten Linse ausgebildet sein. Insbesondere kann die zweite Linse rotationssymmetrisch zu einer Längserstreckungsachse der zweiten Linse ausgebildet sein. Ein Vorteil kann dabei sein, dass die Montage der Linsen durch die Rotationssymmetrie vereinfacht wird, da diese sich bspw. leichter durch Greifarme aufnehmen lassen können.

Ein weiterer Aspekt betrifft eine Radarmessanordnung zur Anlagenautomatisierung, insbesondere zur Füllstands- und/oder Grenzstandüberwachung, welche einen Behälter und eine Antennenanordnung aufweist. Dabei kann der Behälter dazu eingerichtet sein, ein Medium aufzunehmen. Bei der Antennenanordnung kann es sich um eine Antennenanordnung, wie voranstehend und nachfolgend beschrieben, handeln. Zudem kann die Antennenanordnung dazu eingerichtet sein, einen Füllstand und/oder Grenzstand des Mediums in dem Behälter zu ermitteln. In einer beispielhaften Ausführungsform umfasst der Behälter ein hoch erhitztes Medium, von welchem der Füll- bzw. Grenzstand ermittelt werden soll. Mittels der Antennenanordnung und der thermischen Entkopplung der ersten und zweiten Linse der Antennenanordnung kann der verwendete Betrag an thermisch hochresistentem Material deutlich verringert werden, da die erste Linse und/oder der Primärstrahler nicht den hohen Temperaturen des Mediums widerstehen müssen.

Gemäß einer beispielhaften Ausführungsform kann der Behälter und zumindest ein Teil der Antennenanordnung thermisch, elektrisch und/oder medial voneinander entkoppelt sein. Der Vorteil dieser Ausführungsform kann sein, dass durch die thermische, elektrische und/oder mediale Entkopplung die Einsatzmöglichkeiten der Antennenanordnung deutlich erhöht werden. Alternativ kann die Antennenanordnung auch auf einem Behälter, einer Mehrzahl von Behältern und/oder einem Rohr oder einem Bypass angeordnet sein.

Ein weiterer Aspekt betrifft ein Verfahren zum Bestimmen eines Grenzstandes und/oder Füllstandes umfassend die Schritte:
- Aussenden eines Radarsignals mittels eines Primärstrahlers,
- Fokussieren eines Radarsignals mittels einer ersten Linse,
- Optimieren eines Radarsignals mittels einer zweiten Linse,
wobei die erste und die zweite Linse thermisch, elektrisch und/oder medial voneinander entkoppelt sind.

In anderen Worten umfasst das Verfahren zum Bestimmen eines Füll- und/oder Grenzstandes das Aussenden eines Radarsignals auf eine erste Linse, welche das Radarsignal fokussiert. Bei der Fokussierung kann es sich um eine Ausrichtung des Radarsignals auf eine zweite Linse handeln, wobei das Ziel der Fokussierung eine optimale Ausleuchtung der zweiten Linse ist.

Bei dem Verfahrensschritt Optimieren des Radarsignals wird das Radarsignal, welches auf die zweite Linse gerichtet wurde, optimiert, indem die zweite Linse das Radarsignal auf eine Zielbrennweite richtet, um mithilfe der Zielbrennweite einen Füllstand und/oder Grenzstand zu ermitteln.

Merkmale und Elemente der Antennenanordnung, so wie voranstehend und nachfolgend beschrieben, können Merkmale, Elemente und Schritte des Verfahrens, so wie voranstehend und nachfolgend beschrieben, sein und umgekehrt.

Ein weiterer Aspekt betrifft ein Programmelement, das, wenn es von einem Sensor, der insbesondere eineeiner Antennenanordnung aufweist, ausgeführt wird, den Sensor anleitet, Schritte des Verfahrens, so wie voranstehend und nachfolgend beschrieben, durchzuführen.

Bei dem Sensor handelt es sich beispielsweise um einen Füllstandsradarsensor oder, allgemeiner, um eine Radarmessanordnung.

Ein weiterer Aspekt betrifft ein computerlesbares Medium, auf welchem ein Programmelement, so wie voranstehend und nachfolgend beschrieben, hinterlegt ist.

Im Folgenden werden Ausführungsbeispiele unter Bezugnahme auf die Figuren beschrieben.

### Kurze Beschreibung der Figuren

Fig. 1 zeigt einen schematischen Aufbau einer Antennenanordnung gemäß einem Ausführungsbeispiel.
Fig. 2 zeigt einen schematischen Aufbau einer Antennenanordnung gemäß einem Ausführungsbeispiel.
Fig. 3 zeigt einen schematischen Aufbau einer Antennenanordnung gemäß einem Ausführungsbeispiel.
Fig. 4 zeigt einen schematischen Aufbau einer Antennenanordnung gemäß einem Ausführungsbeispiel.
Fig. 5 zeigt einen schematischen Aufbau einer Antennenanordnung gemäß einem Ausführungsbeispiel.
Fig. 6 zeigt einen schematischen Aufbau eines Ausführungsbeispiels.
Fig. 7 zeigt einen schematischen Aufbau einer Antennenanordnung gemäß einem Ausführungsbeispiel.
Fig. 8 zeigt eine Radarmessanordnung gemäß einem Ausführungsbeispiel.
Fig. 9 zeigt ein Flussdiagramm zur Illustration von Schritten eines Verfahrens zum Bestimmen eines Grenzstandes oder Füllstandes gemäß0 einem Ausführungsbeispiel.

Die Figuren sind lediglich schematisch und nicht maßstabsgetreu. In den Figuren können gleiche, gleichwirkende oder ähnliche Elemente mit gleichen Bezugszeichen versehen sein.

### Detaillierte Beschreibung von Ausführungsbeispielen

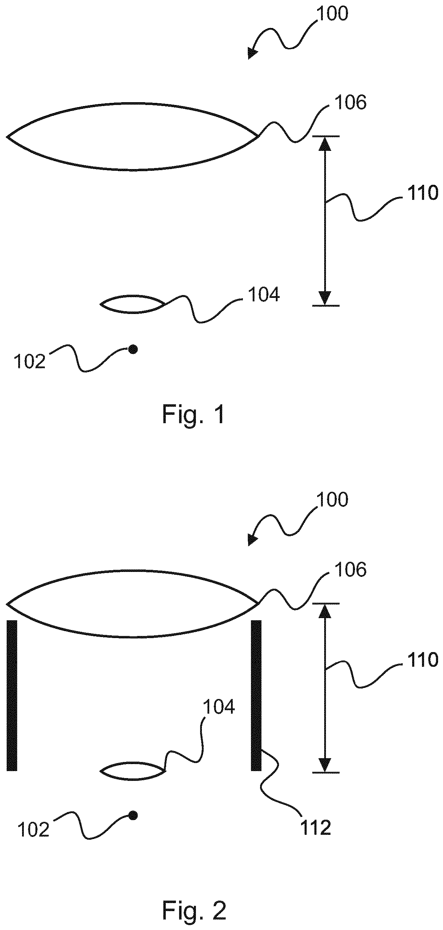

Fig. 1 zeigt einen schematischen Aufbau der Antennenanordnung 100, welches einen Primärstrahler 102, eine erste Linse 104 und eine zweite Linse 106 umfasst. Die erste Linse 104 kann in einem gewissen Abstand 110 zur zweiten Linse 106 angeordnet sein. Dabei kann der Primärstrahler 102 ein Radarsignal emittieren, welches durch die erste Linse 104 fokussiert werden kann, so dass die zweite Linse 106 optimal von der ersten Linse 104 ausgeleuchtet werden kann. Die zweite Linse 106 kann das fokussierte Radarsignal derart optimieren, dass eine Zielbrennweite zur Bestimmung eines Füll- und/oder Grenzstandes ausgesendet wird. Dabei kann bei der Optimierung des fokussierten Radarsignals, das Radarsignal zusätzlich fokussiert werden, sodass sich eine bessere Fokussierung des Radarsignals einstellen kann. Insbesondere kann die zweite Linse ausgeführt sein, das fokussierte Radarsignal weiter zu fokussieren.

Fig. 2 zeigt einen schematischen Aufbau einer Antennenanordnung 100 umfassend einen Primärstrahler 102, eine erste Linse 104 und eine zweite Linse 106. Die erste Linse 104 und die zweite Linse 106 können durch einen Abstand 110 voneinander beabstandet sein. Zwischen der ersten Linse 104 und der zweiten Linse 106 und/oder in einem Randbereich außerhalb des Zwischenraums zwischen den Linsen kann ein Hochfrequenzdämpfer 112 angeordnet sein. Dabei kann der Hochfrequenzdämpfer 112 an der Außenwand der Antennenanordnung 100 angeordnet sein. Der Hochfrequenzdämpfer 112 kann zur Nebenkeulenunterdrückung dienen.

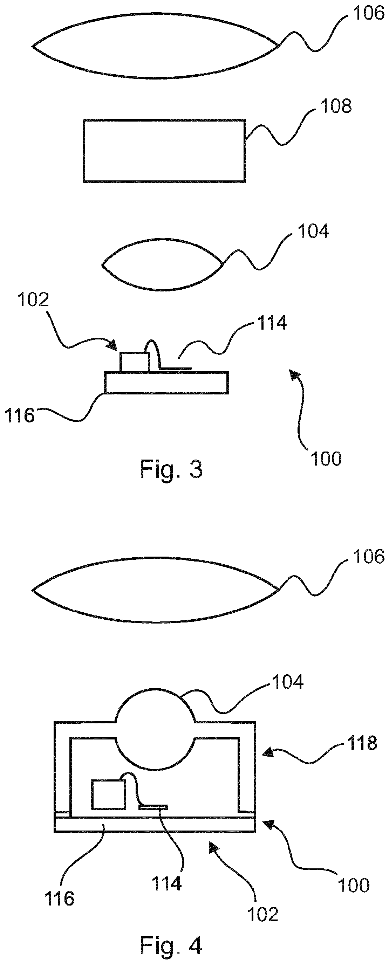

Fig. 3 zeigt einen schematischen Aufbau der Antennenanordnung 100 umfassend einen Primärstrahler 102, eine erste Linse 104 und eine zweite Linse 106. Dabei kann zwischen der ersten Linse 104 und der zweiten Linse 106 ein Isolator 108 angeordnet sein, wobei der Isolator 108 dazu ausgelegt sein kann, einen Wärmefluss zwischen der zweiten Linse 106 und der ersten Linse 104 zu unterbrechen bzw. den Wärmefluss zu reduzieren. Zudem kann die Antennenanordnung 100 den Primärstrahler 102 umfassen, welcher eine Antenne 114 zum Aussenden und/oder Empfangen eines Radarsignals aufweist. Die Antenne 114 kann auf einer Leiterplatte 116 angeordnet sein.

Fig. 4 zeigt einen schematischen Aufbau der Antennenanordnung 100. Die Antennenanordnung 100 kann ein Gehäuse 118 aufweisen, welches die erste Linse aufnimmt und/oder ausbildet. Zudem kann in dem Gehäuse 118 der Primärstrahler 102 angeordnet sein. Der Primärstrahler 102 kann eine Antenne zum Aussenden und/oder Empfangen eines Radarsignals sowie eine Leiterplatte umfassen, auf welcher die Antenne 114 montiert ist. Dabei kann das Gehäuse 118 derart ausgestaltet sein, dass der Primärstrahler, insbesondere die Antenne 114, vor Verunreinigung und/oder Feuchtigkeit geschützt ist.

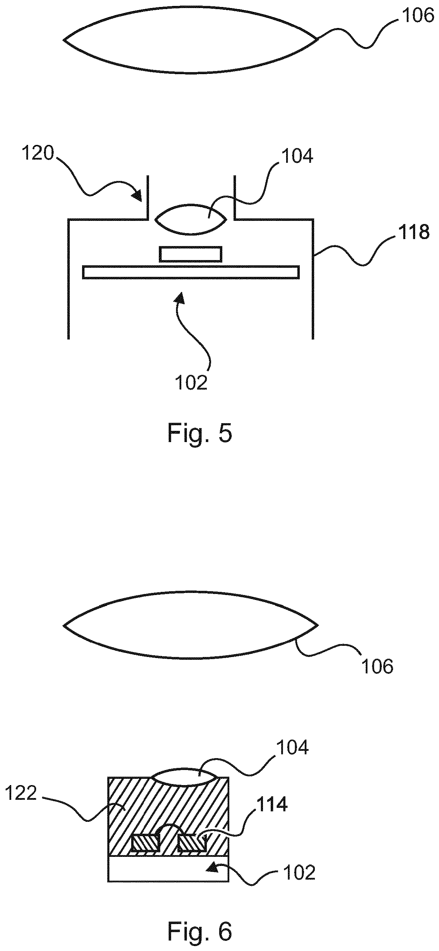

Fig. 5 zeigt einen schematischen Aufbau der Antennenanordnung 100, welches ein Gehäuse 118 aufweist, welches als Elektronikbecher ausgeführt sein kann. Der Elektronikbecher kann eine Öffnung 120 aufweisen, in welcher die erste Linse 104 angeordnet ist. Zudem kann die Antennenanordnung 100 eine zweite Linse 106 aufweisen. Die zweite Linse 106 kann dabei zur besseren Fokussierung des Radarsignals dienen. Insbesondere kann der Primärstrahler innerhalb des Gehäuses bzw. des Elektronikbechers angeordnet sein. Zudem können weitere elektronische Komponenten, wie beispielsweise ein Energiespeicher, in dem Gehäuse 118 bzw. dem Elektronikbecher angeordnet werden.

Fig. 6 zeigt einen schematischen Aufbau der Antennenanordnung, wobei der Primärstrahler 102 sowie die erste Linse aus einem Bauteil hergestellt sein können. Der Primärstrahler 102 und die erste Linse 104 kann mittels eines Kunststoffverbundes 122 miteinander verbunden werden. Der Kunststoffverbund 122 kann dabei die Antenne 114 überdecken. Insbesondere kann eine einteilige Form des Primärstrahlers mit der ersten Linse 104 mittels eines Mehrkomponentenspritzgießverfahrens hergestellt werden. Zudem kann die Antennenanordnung 100 eine zweite Linse 106 umfassen, welche beabstandet von der ersten Linse 104 ausgeführt ist.

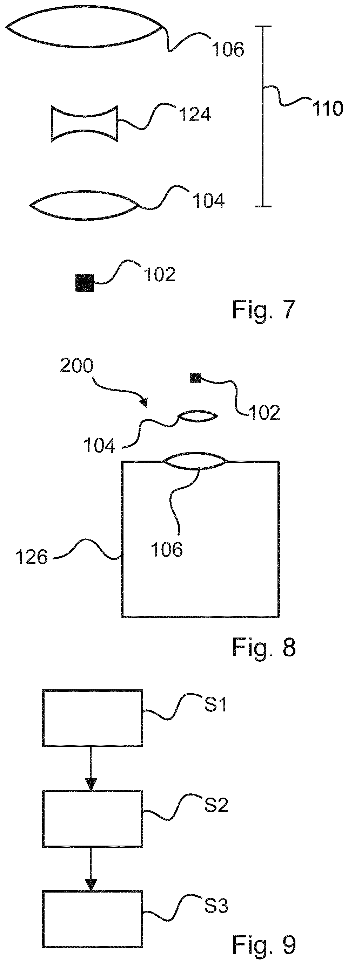

Fig. 7 zeigt eine schematische Ausführungsform der Antennenanordnung 100, wobei die Antennenanordnung einen Primärstrahler 102, eine erste Linse 104, eine zweite Linse 106 sowie eine dritte Linse 124 umfassen kann. Dabei kann die erste Linse von der zweiten Linse in einem definierten Abstand 110 voneinander beabstandet sein. Insbesondere kann die dritte Linse 124 derart ausgeführt, dass ein Abstand 110 zwischen der ersten Linse 104 und der zweiten Linse 106 erhöht werden kann, da die dritte Linse 124 das Radarsignal defokussiert. Somit kann mithilfe der dritten Linse 124 eine optimale Ausleuchtung der zweiten Linse 106 erreicht werden.

Fig. 8 zeigt eine schematische Radarmessanordnung, welche einen Behälter 126 aufweist, an welchem die zweite Linse 106 angeordnet ist. Zudem kann die Radarmessanordnung einen Primärstrahler 102 und eine erste Linse 104 umfassen, welche beabstandet von dem Behälter und/oder der zweiten Linse sind. Dabei kann die Radarmessanordnung 200 derart ausgelegt sein, dass in dem Behälter 126 ein Medium gelagert wird, welches eine erhöhte Temperatur aufweist.

Fig. 9 zeigt ein Flussdiagramm zur Illustration von Schritten eines Verfahrens zum Bestimmen eines Grenzstandes oder Füllstandes gemäß einem Ausführungsbeispiel der Erfindung. Sofern nicht anders beschrieben, kann das Verfahren dieselben Elemente und Merkmale aufweisen wie die Antennenanordnung, wie sie voranstehen und nachfolgend beschrieben wurde.

Das Flussdiagramm zur Illustration von Schritten des Verfahrens in Fig. 9 zeigt die Schritte Aussenden S1, Fokussieren S2 und Optimieren S3. Der Schritt Aussenden S1 kann ein Radarsignal aufweisen, welches mittels eines Primärstrahlers ausgesendet bzw. emittiert werden kann. Der Schritt Fokussieren S2, kann das ausgesendete Radarsignal fokussieren, insbesondere mit der ersten Linse 104. Das Fokussieren kann dazu dienen das Radarsignal auf eine zweite Linse 106 auszurichten, sodass die zweite Linse 106 ausgeleuchtet wird. Der Schritt Optimieren S3 kann das Radarsignal auf einen Brennpunkt richten, insbesondere auch weiter Fokussieren. Das Optimieren kann mit der zweiten Linse 106 erfolgen. Zudem können die erste Linse 104 und die zweite Linse 106 thermisch, elektrisch oder medial voneinander entkoppelt sein, sodass hochresistentes Material eingespart werden kann sowie die thermische Verträglichkeit für den Primärstrahler erhöht werden kann.

Ergänzend sei daraufhingewiesen, dass "umfassend" und "aufweisend" keine anderen Elemente ausschließt und die unbestimmten Artikel "eine" und/oder "ein" keine Vielzahl ausschließen. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkungen anzusehen.

## Patentansprüche

1. Antennenanordnung für einen Sensor (100) zur Anlagenautomatisierung, insbesondere zur Füllstands- oder Grenzstandsüberwachung, aufweisend:
- einen Primärstrahler (102), eingerichtet zum Aussenden eines Radarsignals,
- eine erste Linse (104) zum Fokussieren des Radarsignals,
- mindestens eine zweite Linse (106) zum Optimieren des fokussierten Radarsignals,
wobei die zweite Linse (106) beabstandet von der ersten Linse (104) und dem Primärstrahler (102) angeordnet ist, zur thermischen, elektrischen oder medialen Entkopplung des Primärstrahlers (102) und der ersten Linse (104) von der zweiten Linse (106); **dadurch gekennzeichnet, dass** die Antennenanordnung (100) in einem Randbereich zwischen der ersten (104) und zweiten (106) Linse einen Hochfrequenzdämpfer (112) aufweist,
wobei der Hochfrequenzdämpfer (112) dazu eingerichtet ist, Nebenkeulen des Radarsignals zu unterdrücken.

2. Antennenanordnung gemäß Anspruch 1, wobei der Hochfrequenzdämpfer (112) in dem Randbereich zwischen der ersten (104) und der zweiten (106) Linse derart angeordnet ist, dass der Hochfrequenzdämpfer (112) die erste Linse (104) und der Primärstrahler (102) von der zweiten Linse (106) thermisch, elektrisch oder medial entkoppelt.

3. Antennenanordnung gemäß einem der vorherigen Ansprüche, wobei die Antennenanordnung (100) ein Gehäuse (118) umfasst,
wobei der Primärstrahler (102) in dem Gehäuse (118) angeordnet ist,
wobei das Gehäuse (118) die erste Linse (104) aufnimmt oder ausbildet.
CGS:CGS

4. Antennenanordnung gemäß Anspruch 3, wobei das Gehäuse (118) eine Öffnung (120) aufweist, in welche die erste Linse (104) angeordnet ist,
wobei das Gehäuse (118) eingerichtet ist, weitere Komponenten aufzunehmen.

5. Antennenanordnung gemäß einem der vorherigen Ansprüche, wobei der Primärstrahler (102) und die erste Linse (104) einteilig ausgeführt sind.

6. Antennenanordnung gemäß Anspruch 5, wobei der Primärstrahler (102) und die erste Linse (104) mittels eines Kunststoffverbundes (122) miteinander verbunden sind.

7. Antennenanordnung gemäß Anspruch 6, wobei der Kunststoffverbund eine geringere Dielektrizitätskonstante aufweist als die erste Linse.

8. Antennenanordnung gemäß einem der vorherigen Ansprüche, wobei die zweite Linse (106) eine größere Brennweite als die erste Linse (104) aufweist.

9. Antennenanordnung gemäß einem der vorherigen Ansprüche, wobei die Antennenanordnung (100) eine dritte Linse (124) aufweist,
wobei die dritte Linse (124) zwischen der ersten (104) und der zweiten (106) Linse angeordnet ist,
wobei die dritte Linse (124) dazu eingerichtet ist, den Abstand (110) zwischen der ersten (104) und der zweiten (106) Linse zu erhöhen, insbesondere mittels Defokussierung.

10. Antennenanordnung gemäß Anspruch 9, wobei die dritte Linse von der zweiten Linse thermisch, elektrisch und/oder medial entkoppelt ist.

11. Antennenanordnung gemäß einem der vorherigen Ansprüche, wobei die erste und die zweite Linse rotationssymmetrisch ausgebildet sind.

12. Antennenanordnung gemäß einem der vorherigen Ansprüche, wobei die zweite Linse (106) eingerichtet ist, Temperaturen von über 100°C zu widerstehen.

13. Radarmessanordnung (200) zur Anlagenautomatisierung, insbesondere zur Füllstands- oder Grenzstandsüberwachung, aufweisend:
- einen Behälter (126), dazu eingerichtet, ein Medium aufzunehmen,
- eine Antennenanordnung (100) gemäß einem der Ansprüche 1-12,
wobei die Antennenanordnung (100) eingerichtet ist, einen Füll- oder Grenzstand des Mediums in dem Behälter zu ermitteln.

14. Sensor mit einer Antennenanordnung (100) gemäß einem der Ansprüche 1-12.

15. Verfahren zum Bestimmen eines Grenzstandes oder Füllstandes mit einer Antennenanordnung (100) gemäß einem der Ansprüche 1-12, umfassend die Schritte:
- Aussenden (S1) eines Radarsignals mittels eines Primärstrahler,
- Fokussieren (S2) eines Radarsignals mittels einer ersten Linse,
- Optimieren (S3) eines Radarsignals mittels einer zweiten Linse,
wobei die erste und die zweite Linse thermisch, elektrisch oder medial voneinander entkoppelt sind.

## Claims

1. Antenna assembly for a sensor (100) for facility automation, in particular for fill level or limit level monitoring, comprising:
- a primary emitter (102) arranged to transmit a radar signal,
- a first lens (104) for focusing the radar signal,
- at least one second lens (106) for optimizing the focused radar signal,
wherein the second lens (106) is spaced apart from the first lens (104) and the primary emitter (102) for thermally, electrically or medially decoupling the primary emitter (102) and the first lens (104) from the second lens (106);
**characterized in that**
the antenna arrangement (100) comprises a radio frequency attenuator (112) in an edge region between the first (104) and second (106) lenses,
the radio frequency attenuator (112) is arranged to suppress side lobes of the radar signal.

2. Antenna assembly according to claim 1, wherein the radio frequency attenuator (112) is arranged in the edge region between the first (104) and the second (106) lens such that the radio frequency attenuator (112) thermally, electrically or medially decouples the first lens (104) and the primary radiator (102) from the second lens (106).

3. Antenna assembly according to any one of the preceding claims, wherein the antenna assembly (100) comprises a housing (118),
wherein the primary emitter (102) is arranged in the housing (118),
wherein the housing (118) receives or forms the first lens (104).

4. Antenna assembly according to claim 3, wherein the housing (118) comprises an opening (120) in which the first lens (104) is arranged,
wherein the housing (118) is configured to receive further components.

5. Antenna assembly according to any one of the preceding claims, wherein the primary emitter (102) and the first lens (104) are made in one piece.

6. Antenna assembly according to claim 5, wherein the primary emitter (102) and the first lens (104) are connected to each other by means of a plastic composite (122).

7. Antenna assembly according to claim 6, wherein the plastic composite has a lower dielectric constant than the first lens.

8. Antenna assembly according to any one of the preceding claims, wherein the second lens (106) has a larger focal length than the first lens (104).

9. Antenna assembly according to any one of the preceding claims, wherein the antenna assembly (100) comprises a third lens (124),
wherein the third lens (124) is disposed between the first (104) and second (106) lenses,
wherein the third lens (124) is configured to increase the distance (110) between the first (104) and second (106) lenses, in particular by means of defocusing.

10. Antenna assembly according to claim 9, wherein the third lens is thermally, electrically and/or medially decoupled from the second lens.

11. Antenna assembly according to any one of the preceding claims, wherein the first and second lenses are rotationally symmetrical.

12. Antenna assembly according to any one of the preceding claims, wherein the second lens (106) is configured to withstand temperatures above 100°C.

13. Radar measuring assembly (200) for facility automation, in particular for fill level or limit level monitoring, comprising:
- a container (126) configured to receive a medium,
- an antenna assembly (100) according to any one of claims 1-12,
wherein the antenna assembly (100) is arranged to detect a fill level or limit level of the medium in the container.

14. Sensor comprising an antenna assembly (100) according to any one of claims 1-12.

15. Method for determining a limit level or fill level with an antenna assembly (100) according to any one of claims 1-12, comprising the steps of:
- Transmitting (S1) a radar signal by means of a primary emitter,
- Focusing (S2) a radar signal by means of a first lens,
- Optimizing (S3) a radar signal by means of a second lens,
wherein the first and second lenses are thermally, electrically or medially decoupled from each other.

## Revendications

1. Agencement d'antenne pour un capteur (100) pour l'automatisation d'une installation, en particulier pour la surveillance du niveau de remplissage ou du niveau limite, comprenant :
- un faisceau primaire (102) disposé pour transmettre un signal radar,
- une première lentille (104) pour la focalisation du signal radar,
- au moins une seconde lentille (106) pour optimiser le signal radar focalisé,
dans lequel la deuxième lentille (106) est espacée de la première lentille (104) et du faisceau primaire (102) pour découpler thermiquement, électriquement ou médialement le faisceau primaire (102) et la première lentille (104) de la deuxième lentille (106);
**caractérisé en ce que**
l'agencement d'antenne (100) comprend un atténuateur de fréquence radio (112) dans une région de bord entre la première (104) et la deuxième (106) lentille,
l'atténuateur de fréquence radio (112) est disposé de manière à supprimer les lobes latéraux du signal radar.

2. Agencement d'antenne selon la revendication 1, dans lequel l'atténuateur de fréquence radio (112) est disposé dans la région de bord entre la première (104) et la deuxième (106) lentille de telle sorte que l'atténuateur de fréquence radio (112) découple thermiquement, électriquement ou médialement la première lentille (104) et le faisceau primaire (102) de la deuxième lentille (106).

3. Agencement d'antenne selon l'une quelconque des revendications précédentes, l'agencement d'antenne (100) comprenant un boîtier (118),
dans lequel le faisceau primaire (102) est disposé dans le boîtier (118),
le boîtier (118) recevant ou formant la première lentille (104).

4. Agencement d'antenne selon la revendication 3, dans lequel le boîtier (118) comporte une ouverture (120) dans laquelle est disposée la première lentille (104), le logement (118) étant configuré pour recevoir d'autres éléments.

5. Agencement d'antenne selon l'une quelconque des revendications précédentes, dans lequel le faisceau primaire (102) et la première lentille (104) sont réalisés en une seule pièce.

6. Agencement d'antenne selon la revendication 5, dans lequel le faisceau primaire (102) et la première lentille (104) sont reliés entre eux au moyen d'un composite plastique (122).

7. Agencement d'antenne selon la revendication 6, dans lequel le composite plastique a une constante diélectrique inférieure à celle de la première lentille.

8. Agencement d'antenne selon l'une quelconque des revendications précédentes, dans lequel la deuxième lentille (106) a une longueur focale plus grande que la première lentille (104).

9. Agencement d'antenne selon l'une quelconque des revendications précédentes, dans lequel l'agencement d'antenne (100) comprend une troisième lentille (124),
la troisième lentille (124) étant disposée entre la première (104) et la deuxième (106) lentilles,
la troisième lentille (124) étant configurée pour augmenter la distance (110) entre la première (104) et la deuxième (106) lentilles, en particulier au moyen de la défocalisation.

10. Agencement d'antenne selon la revendication 9, dans lequel la troisième lentille est thermiquement, électriquement et/ou médialement découplée de la deuxième lentille.

11. Agencement d'antenne selon l'une quelconque des revendications précédentes, dans laquelle la première et la deuxième lentille sont symétriques en rotation.

12. Agencement d'antenne selon l'une quelconque des revendications précédentes, dans lequel la deuxième lentille (106) est configurée pour résister à des températures supérieures à 100°C.

13. Dispositif de mesure radar (200) pour l'automatisation des installations, en particulier pour la surveillance du niveau de remplissage ou du niveau limite, comprenant :
- un contenant (126) configuré pour recevoir un médium,
- un agencement d'antenne (100) selon l'une des revendications 1 à 12,
dans lequel l'agencement d'antenne (100) est configuré pour détecter un niveau de remplissage ou un niveau limite du médium dans le contenant.

14. Capteur comprenant un agencement d'antenne (100) selon l'une des revendications 1-12.

15. Méthode de détermination d'un niveau limite ou d'un niveau de remplissage avec un agencement d'antenne (100) selon l'une quelconque des revendications 1 à 12, comprenant les étapes suivantes
- Transmission (S1) d'un signal radar au moyen d'un faisceau primaire,
- Mise au point (S2) d'un signal radar au moyen d'une première lentille,
- Optimisation (S3) d'un signal radar au moyen d'une deuxième lentille,
la première et la deuxième lentille étant découplées thermiquement, électriquement ou médialement l'une de l'autre.
